# EUROPÄISCHE PATENTANMELDUNG

(11) **EP 0 541 094 A1**
(43) Veröffentlichungstag der Anmeldung: **12.05.1993**
(21) Anmeldenummer: 92118983.3
(22) Anmeldetag: 05.11.1992
(51) Int. Cl.: B62B 3/06

(54) **Gabelhubwagen**

(30) Priorität: 07.11.1991 DE 4136705
(71) Anmelder: Crown Gabelstapler GmbH, D-81677 München (DE)
(72) Erfinder: Galek, Leszek, W-8017 Ebersberg (DE)
(74) Vertreter: Lieck, Hans-Peter, Dipl.-Ing.

(57) **Zusammenfassung**

Es wird ein Gabelhubwagen angegeben, mit einem Antriebsteil(1), mit einem an dem Antriebsteil (1) geführten Lastteil (3), das mittels zweier paralleler Hubzylinder (2) relativ zum Antriebsteil (1) höhenbewegbar ist und das einen in festem Winkel zur relativen Bewegungsrichtung angeordneten Lastträger (5) aufweist, der auf seiner Unterseite Lastrollen (15) an schwenkbaren Achsgabeln (13) besitzt. Der Gabelhubwagen weist ferner eine Höhensteuereinrichtung auf, die in Abhängigkeit der Relativbewegung zwischen Antriebsteil (1) und Lastteil (3) die Achsgabeln (13) unter Veränderung des Abstands zwischen Lastrollen (15) und Lastträger (5) über ein Gestänge (11) schwenkt. Schließlich sind auch auf das Gestänge (11) einwirkende Stellzylinder (4) vorgesehen, die unabhängig von der Relativbewegung ein Verschwenken der Achsgabeln (13) ermöglichen.

Mit dem Ziel einer möglichst kompakten und einfachen Konstruktion eines Gabelhubwagens ist erfindungsgemäß vorgesehen, daß jeweils ein Hubzylinder (2) und ein Stellzylinder (4) auf einer gemeinsamen Kolbenstange (6) sitzen.

## Beschreibung

Die Erfindung betrifft einen Gabelhubwagen mit einem Antriebsteil, mit einem an dem Antriebsteil geführten Lastteil, das mittels eines oder mehrerer Hubzylinder relativ zum Antriebsteil höhenbewegbar ist und das einen im festen Winkel zur relativen Bewegungsrichtung angeordneten Lastträger mit darunter an schwenkbaren Achsgabeln angeordneten Lastrollen aufweist, mit einer Höhensteuereinrichtung, die in Abhängigkeit der Relativbewegung zwischen Antriebsteil und Lastteil die Achsgabeln unter Veränderung des Abstandes zwischen Lastrollen und Lastträgern über ein Gestänge schwenkt, und mit einem auf das Gestänge einwirkenden Stellzylinder, der unabhängig von der Relativbewegung ein Verschwenken der Achsgabeln ermöglicht.

Derartige Hubwagen sind bekannt und dienen dem Ver- oder Umladen von Gütern, insbesondere von auf Paletten befindlichen Gütern. Für letztere und überwiegend vorkommende Verwendung besitzen die Hubwagen Lastträger in Form einer Gabel, mit der eine zu transportierende Palette unterfahren und sodann angehoben wird.

Hubwagen der eingangs genannten Art können entweder mit einer Deichsel zum Lenken und zur Bedienung ausgestattet sein, oder aber als Aufsitz-Hubwagen mit einem Fahrersitz.

Da die Verkehrswege in Lagerräumen und auch die zu beladenden Transportmittel, z. B. Lastkraftwagen, eng sind, besteht an Hubwagen im allgemeinen die Anforderung, daß sie eine möglichst geringe Baugröße bei maximaler Transportleistung haben sollten. Unter "Baugröße" ist dabei weniger die Höhe des Hubwagens zu verstehen, sondern insbesondere die Länge, die den Wendekreis des Hubwagens beeinflußt und an der sich die zwischen Lagerregalen einzuhaltenden Freiräume orientieren.

Aus der DE-PS 36 14 986 ist ein Hubwagen bekannt, der ein Antriebsteil und ein an dem Antriebsteil geführtes Lastteil aufweist, welches mittels zweier parallel zu beiden Seiten des Hubwagens angeordneter Hubzylinder relativ zum Antriebsteil höhenbewegbar ist und das einen in festem Winkel zur relativen Bewegungsrichtung angeordneten gabelförmigen Lastträger mit darunter an schwenkbaren Achsgabeln angeordneten Lastrollen aufweist. Dieser bekannte Hubwagen besitzt ferner eine Höhensteuereinrichtung, die in Abhängigkeit der Relativbewegung zwischen Antriebsteil und Lastteil die Achsgabeln unter Veränderung des Abstandes zwischen den Lastrollen und dem Lastträger über ein Gestänge schwenkt, wobei durch einen im Antriebsteil untergebrachten Stellzylinder ein von der Relativbewegung zwischen Antriebsteil und Lastteil unabhängiges Verschwenken der Achsgabeln möglich ist.

Die Nachteile dieses bekannten Hubwagens liegen insbesondere darin, daß der Stellzylinder völlig separat angeordnet ist und somit sowohl für den Stellzylinder selbst als auch für die den Stellzylinder mit der Höhensteuereinrichtung verbindende Mechanik erheblicher Platz im Antriebsteil oder Lastteil benötigt wird. Dieser Nachteil sowie die Tatsache des Erfordernisses einer Verbindungsmechanik für den Stellzylinder mit der Höhensteuereinrichtung bzw. dem Gestänge wirkt sich äußerst nachteilig auf die Baugröße des Hubwagens aus.

Die DE-PS 37 10 776 offenbart eine Weiterentwicklung zu dem vorstehend erläuterten bekannten Hubwagen, mit welcher der Stellzylinder aus dem Antriebsteil heraus in das Lastteil verlagert und in das Gestänge zwischen der Höhensteuereinrichtung und den Achsgabeln integriert wurde.

Die Nachteile dieser bekannten Hubwagenkonstruktion liegen insbesondere darin, daß durch das Einfügen des Stellzylinders in das Gestänge zwischen Höhensteuereinrichtung und Lastrollen-Achsgabeln eine aufwendige Gestängekonstruktion erforderlich ist. Hinzu kommt, daß aufgrund der Unterbringung des Stellzylinders im Lastteil Hydraulikleitungen und andere Steuerleitungen vom Antriebsteil zum Lastteil geführt werden müssen.

Als Aufgabe der vorliegenden Erfindung wurde es angesehen, einen Hubwagen der eingangs genannten Art kompakter bauen zu können.

Diese Aufgabe wird bei einem Gabelhubwagen der eingangs genannten Art erfindungsgemäß dadurch gelöst, daß der Hubzylinder und der Stellzylinder auf einer gemeinsamen Kolbenstange sitzen.

Die Vorteile der erfindungsgemäßen Lösung liegen insbesondere darin, daß die gesamte Hub- und Stelleinrichtung im Antriebsteil untergebracht ist und desweiteren eine geringstmögliche Baulänge des Hubwagens erzielt wird.

Ein weiterer Vorteil der erfindungsgemäßen Lösung liegt darin, daß die Hub- und Stelleinrichtung aufgrund der gemeinsamen Kolbenstange einen einfacheren Aufbau besitzt, und somit billiger herzustellen und im Betrieb verläßlicher ist.

Mit dem erfindungsgemäßen Gabelhubwagen können im wesentlichen drei Betriebszustände eingenommen werden. Im ersten Betriebszustand befinden sich die Lastrollen des Lastteils und die Antriebsräder auf einer gemeinsamen horizontalen Ebene, der Lastträger ist abgesenkt, die unter dem Lastträger befindlichen Lastrollen sind im wesentlichen in die Ebene des Lastträgers eingeschwenkt und das Antriebsteil und das Lastteil befinden sich in ihrem Grundzustand ohne gegenseitige relative Verschiebung in zur Fahrbahn senkrechter Richtung.

Der zweite Betriebszustand ist durch ein paralleles Anheben des Lastträgers gegenüber dem Antriebsteil unter Ausschwenken der Lastrollen aus der Ebene des Lastträgers gekennzeichnet. Der Hubwagen ist horizontal ausgerichtet; die Lastrollen stützen den Lastträger und laufen mit den Antriebsrädern auf einer gemeinsamen horizontalen Fahrbahn.

Der dritte Betriebszustand ist durch den Stufenhub gekennzeichnet, bei dem das Lastteil gegenüber dem Antriebsteil zwar angehoben ist, die Lastrollen jedoch in die Ebene des Lastträgers eingeschwenkt sind. In diesem Betriebszustand fährt der Hubwagen eine schräge Ebene, beispielsweise eine Rampe, hinauf, wobei allerdings die Lastträger-Ebene horizontal gehalten wird.

Bevorzugte Weiterbildungen der Erfindung sind in den Unteransprüchen angegeben.
Für die Anordnung des Hubzylinders und des Stellzylinders und deren Befestigung am Antriebsteil bzw. Lastteil werden zwei vorteilhafte Alternativen vorgeschlagen. Nach einer ersten ist vorgesehen, daß der Hubzylinder am Antriebsteil befestigt ist und die dem Hubzylinder und dem Stellzylinder gemeinsame Kolbenstange am Lastteil. Alternativ hierzu ist vorgesehen, daß der Hubzylinder am Lastteil befestigt ist und die dem Hubzylinder und dem Stellzylinder gemeinsame Kolbenstange am Antriebsteil. Beide Lösungen ermöglichen mit einer entsprechenden hydraulischen Steuereinrichtung das wahlweise Einnehmen sämtlicher vorgenannter Betriebszustände in beliebiger Reihenfolge.

Vorzugsweise weist die Höhensteuereinrichtung einen bogenförmigen Schwenkhebel auf, dessen eines Ende über das Gestänge gelenkig mit den Achsgabeln der Lastrollen verbunden ist, dessen anderes Ende in Wirkverbindung mit dem Stellzylinder steht, und der um eine zwischen seinen Enden angeordnete Schwenkachse schwenkbar ist. Der bogenförmige Schwenkhebel dient somit der Übertragung einer Relativbewegung zwischen Antriebsteil und Lastteil auf die Lastrollen. Seine Bogenform ist insbesondere deshalb von Vorteil, weil der Schwenkhebel dadurch verhältnismäßig gut in die Gesamtkonstruktion integrierbar ist, ohne die geringstmögliche Bodenfreiheit des Lastträgers über der Fahrbahn einzuschränken.

Besonders bevorzugterweise besitzt die Höhensteuereinrichtung ferner eine im wesentlichen L-förmige Stange, die mit dem einen Schenkel am Gehäuse des Stellzylinders befestigt ist, und mit dem anderen (Basis-)Schenkel in Wirkverbindung mit dem bogenförmigen Schwenkhebel steht. Die L-förmige Stange ist somit eine mögliche Ausführungsform zur Übertragung einer Relativbewegung zwischen Antriebsteil und Lastteil sowie einer Stellbewegung des Stellzylinders auf den Schwenkhebel und damit auf die Achsgabeln der Lastrollen.

Vorzugsweise besitzt der Schwenkhebel an seinem dem Gestänge abgewandten Ende eine Rolle, welche auf der Unterseite des Basisschenkels der L-förmigen Stange gleitend geführt ist. Durch diese Konstruktion ist eine bei dem ersten bekannten Hubwagen der eingangs genannten Art erforderliche Verbindungslasche zwischen dem einen Ende des bogenförmigen Schwenkhebels und dem Stellzylinder überflüssig. Die Relativbewegung zwischen dem Ende des bogenförmigen Schwenkhebels und dem Basisschenkel der L-förmigen Stange in horizontaler Richtung wird durch das Gleitlager aufgefangen.

Alternativ zu dieser Gleitführung kann selbstverständlich auch ein gelenkiges Zwischenstück vorgesehen sein, das zwischen dem einen Ende des bogenförmigen Schwenkhebels und dem Basisschenkel der L-förmigen Stange eingesetzt ist.

Für eine bessere Kräfteverteilung ist vorzugsweise vorgesehen, daß die Höhensteuereinrichtung, das Gestänge sowie die Doppel-Zylinderanordnung doppelt vorhanden sind, und zwar je einmal zu beiden Seiten des Hubwagens.

Besonders bevorzugterweise sind der Stellzylinder und der Hubzylinder über eine hydraulische Steuereinrichtung zusammgeschlossen, und gemäß einer anderen Weiterbildung ist einer der beiden auf einer gemeinsamen Kolbenstange sitzenden Zylinder über eine Saugleitung mit dem Druckmitteltank verbunden und wird von der Bewegung des anderen Zylinders beim Wechsel bestimmter Betriebszustände mitgenommen.

Im folgenden werden ein bevorzugtes Ausführungsbeispiel sowie ein weiteres Ausführungsbeispiel der Erfindung anhand einer Zeichnung näher erläutert.

Es zeigen:
- Figur 1: einen Längsschnitt durch das bevorzugte Ausführungsbeispiel eines Gabelhubwagens im Grundzustand;
- Figur 2: eine der Figur 1 entsprechende Darstellung, jedoch im Betriebszustand II (Parallelhub);
- Figur 3: eine der Figur 1 entsprechende Darstellung, jedoch im Betriebszustand III (Stufenhub);
- Figur 4: ein schematisches Schaltbild einer hydraulischen Steuereinrichtung für das Ausführungsbeispiel eines Hubwagens gemäß den Figuren 1 - 3;
- Figur 5: einen Länggschnitt durch ein zweites Ausführungsbeispiel eines Gabelhubwagens im Grundzustand;
- Figur 6: eine der Figur 5 entsprechende Darstellung, jedoch im Betriebszustand II (Parallelhub); und
- Figur 7: eine der Figur 5 entsprechende Darstellung, jedoch im Betriebszustand III (Stufenhub).

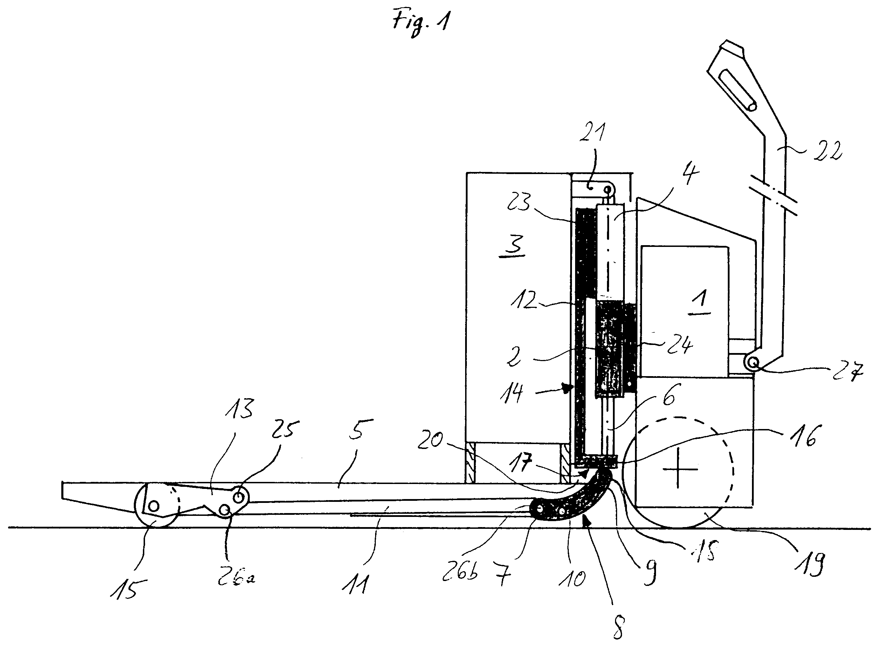

Figur 1 zeigt einen Längsschnitt durch einen Gabelhubwagen im (Grund-)Betriebszustand I, in welchem der Hubwagen auf einer horizontalen Ebene steht. Der Hubwagen besitzt im wesentlichen ein Antriebsteil 1 und ein an dem Antriebsteil 1 geführtes Lastteil 3, welches mittels eines Hubzylinders 2 relativ zum Antriebsteil 1 höhenbewegbar ist. Das Lastteil 3 weist ferner einen in einem Winkel von etwa 90° zur relativen Bewegungsrichtung angeordneten Lastträger 5 mit darunter an schwenkbaren Achsgabeln 13 angeordneten Lastrollen 15 auf. Diese Lastrollen dienen der Abstützung des Lastträgers gegen die Fahrbahn, wobei die Lastrollen 15 in dem in dieser Figur dargestellten Betriebszustand auf einer horizontalen Fahrbahn mit den Antriebsrädern 19 des Antriebsteils 1 ruhen.

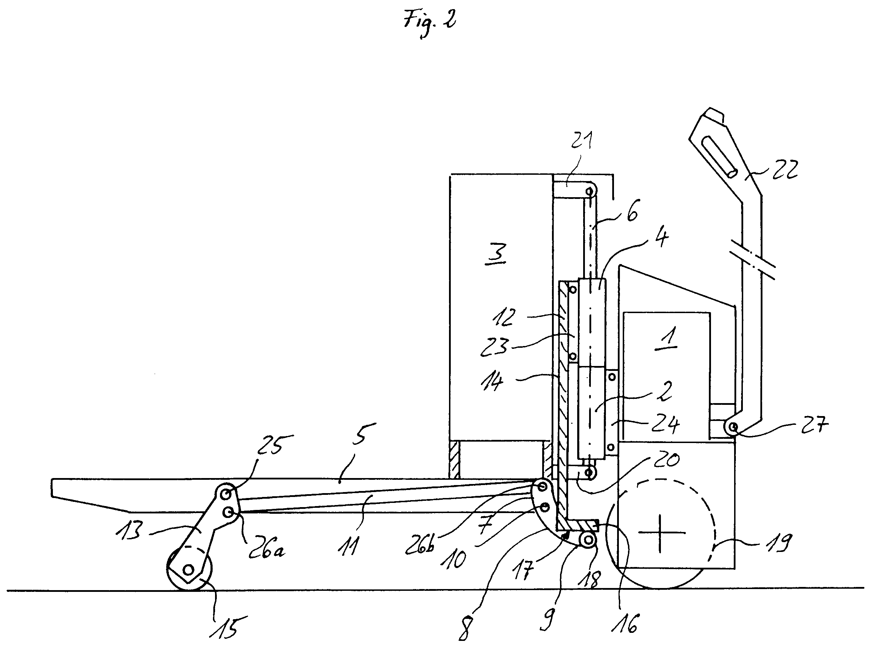

Damit der Hubwagen beim Anheben einer Last seine zur Fahrbahn parallele, horizontale Ausrichtung beibehält, schwenken die Lastrollen 15 an den Achsgabeln 13 aus der Ebene des Lastträgers nach unten heraus (Fig. 2), und zwar entsprechend dem Maß der Relativbewegung zwischen Antriebsteil 1 und Lastteil 3.

Zur Übertragung der Relativbewegung zwischen Antriebsteil 1 und Lastteil 3 ist eine Höhensteuereinrichtung vorgesehen, die im wesentlichen aus einem bogenförmigen Schwenkhebel 8 und einer L-förmigen Stange 14 besteht. Die L-förmige Stange 14 ist mit ihrem einen Schenkel 12 mit einem Flansch 23 am Gehäuse eines Stellzylinders 4 befestigt. Die Unterseite 17 des Basisschenkels 16 der L-förmigen Stange 14 bildet ein Gleitlager für eine Rolle 18, die an dem einen Ende 9 des bogenförmigen Schwenkhebels 8 drehbar befestigt ist. Das andere Ende 7 des bogenförmigen Schwenkhebels 8 ist über ein Gestänge 11 gelenkig mit den Achsgabeln 13 der Lastrollen 15 verbunden. Ferner ist der Schwenkhebel 8 um eine zwischen seinen Enden 7,9 angeordnete Schwenkachse 10 schwenkbar.

Der Stellzylinder 4 sitzt auf einer Kolbenstange 6 mit dem Hubzylinder 2, wobei letzterer über einen Flansch 24 fest mit dem Antriebsteil verbunden ist. Die den beiden Zylindern 2,4 gemeinsame Kolbenstange 6 ist mittels zweier Halterungen 20,21 am Lastteil 3 befestigt.

Das Antriebsteil 1 ist mit einer Deichsel 22 ausgerüstet, die um eine Achse 27 schwenkbar mit dem Antriebsteil 1 verbunden ist und das Bedienfeld für den Hubwagen trägt.

In dem dargestellten (Grund-)Betriebszustand I befinden sich das Antriebsteil 1 und das Lastteil 3 ohne gegenseitige Relativverschiebung in ihrer Grundstellung, bei der die Lastrollen 15 und die Antriebsräder 19 auf einer gemeinsamen horizontalen Fahrbahn ruhen. In diesem Betriebszustand I sind sowohl der Hubzylinder 2 als auch der Stellzylinder 4 in ihrer oberen Stellung und die Achsgabeln 13 sind im wesentlichen in die Ebene des Lastträgers 5 eingeschwenkt.

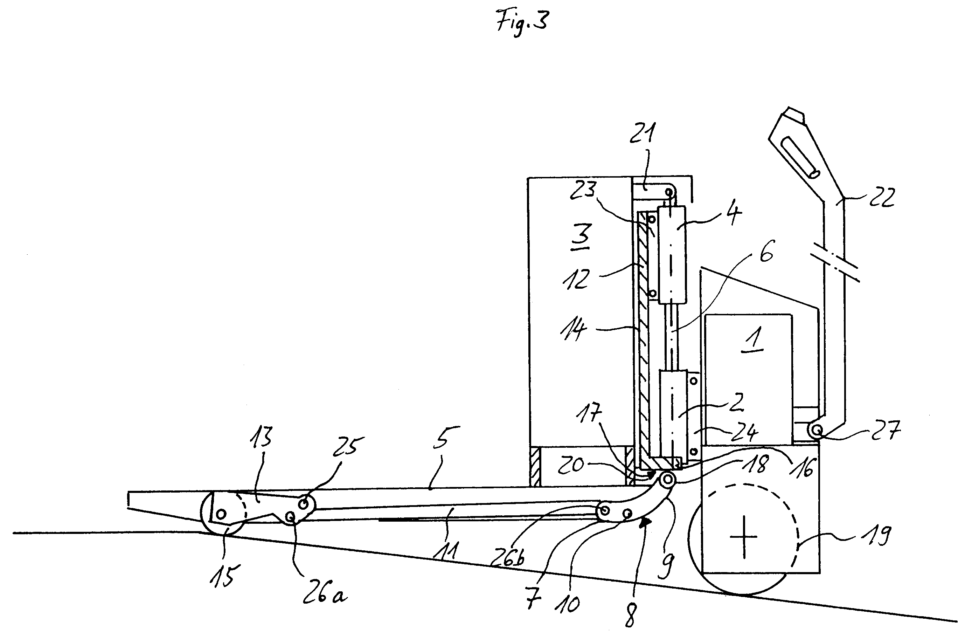

Der Funktionsablauf beim Wechsel von dieser Grundstellung in den Betriebszustand II (Parallelhub) oder den Betriebszustand III (Stufenhub) und die Funktionsabläufe beim Wechsel zwischen diesen Betriebszuständen werden nachstehend anhand der Figuren 2 und 3 unter permanenter Rückschau auf die Figur 1 erläutert.

Figur 2 zeigt den Gabelhubwagen gemäß Figur 1 im Betriebszustand II, welcher durch den Parallelhub des Lastträgers 5 im Verhältnis zur Fahrbahn gekennzeichnet ist. In diesem Betriebszustand sind die Lastrollen 15 an den Achsgabeln 13 aus ihrer Ruhelage herausgeschwenkt und stützen den Lastträger 5 ab. Ferner ist in diesem Betriebszustand das Lastteil 3 gegenüber dem Antriebsteil 1 nach oben verschoben, was durch ein Absenken des Stellzylinders 4 unter Mitnahme des Hubzylinders 2 erfolgt ist. Die durch das Absenken der Zylinder 2,4 hervorgerufene Relativbewegung zwischen dem Antriebsteil 1 und dem Lastteil 3 teilt sich den Achsgabeln 13 über die Höhensteuereinrichtung, bestehend aus dem bogenförmigen Schwenkhebel 8 und der L-förmigen Stange 14, mit. Durch das Anheben des Lastteils 3 wird nämlich auch die Schwenkachse 10 des bogenförmigen Schwenkhebels 8 angehoben, während das Ende 9 des Schwenkhebels 8 mit der dort drehbar angebrachten Rolle 18 auf der als Gleitlager ausgebildeten Unterseite 17 des Basisschenkels 16 der L-förmigen Stange 14 gleitet, wobei zu beachten ist, daß das Gleitlager 17 und auch das Ende 9 des Schwenkhebels 8 gegenüber dem Antriebsteil 1 keine Relativbewegung in zur Fahrbahn senkrechter Richtung ausführt. Die Unterseite 17 des Basisschenkels 16 wirkt somit auch als Gegenlager bei einer Relativbewegung zwischen Lastteil 3 und Antriebsteil 1, wodurch der bogenförmige Schwenkhebel 8 um seine Schwenkachse 10 bei der Bewegung vom Betriebszustand I in den Betriebszustand II im Uhrzeigersinn geschwenkt wird.

Durch diese Schwenkbewegung wird das Ende 7 des Schwenkhebels 8 ebenfalls im Uhrzeigersinn geschwenkt, wodurch die Achsgabeln 13 über das Gestänge 11 ausgeschwenkt werden, welches an den Achsen 26a, 26b gelenkig mit den Achsgabeln 13 bzw. dem Ende 7 des bogenförmigen Schwenkhebels 8 verbunden ist.

Figur 3 zeigt den Gabelhubwagen gemäß Figur 1 im Betriebszustand III, der durch einen Stufenhub des Lastteils 3 gegenüber dem Antriebsteil 1 gekennzeichnet ist. In diesem Betriebszustand ist das Antriebsteil 1 gegenüber dem Lastteil 3 abgesenkt (wie im Betriebszustand II gemäß Figur 2), jedoch sind die Achsgabeln 13 in der Ebene des Lastträgers 5 eingeschwenkt geblieben. Der Hubwagen kann in diesem Betriebszustand 3 schräge Ebenen, z. B. Laderampen, befahren und dabei die Ausrichtung der Lastträgerebene horizontal halten. Der maximale Anstieg der zu befahrenden Ebene wird durch das maximale Maß der relativen Verschiebung zwischen Lastteil 3 und Antriebsteil 1 in zur Lastträgerebene senkrechter Richtung bestimmt.

Fährt der Hubwagen auf einer schiefen Ebene (Figur 3) im Betriebszustand III und gerät dann wieder auf eine horizontale Fahrbahn, so muß von dem Betriebszustand III in den Betriebszustand II gewechselt werden. Hierzu fährt der unabhängig von einer Relativbewegung zwischen Antriebsteil 1 und Lastteil 3 auf die Höhensteuereinrichtung einwirkende Stellzylinder 4 aus seiner oberen Position (Figur 3) in die untere Position, wobei die L-förmige Stange 14 der Höhensteuereinrichtung den bogenförmigen Schwenkhebel 8 im Uhrzeigersinn um dessen Schwenkachse 10 schwenkt, woraufhin die Achsgabeln um deren Schwenkachse 25 herausgeschwenkt werden (Figur 2). Eine Relativbewegung zwischen Antriebsteil und Lastteil erfolgt hierbei nicht.

Zum Absenken des Lastteils 3 gegenüber dem Antriebsteil 1 aus dem Betriebszustand II in den (Grund-)Betriebszustand I erfolgt durch einfaches Absenken der Kolbenstange 6 mit dem daran befestigten Lastteil 3, wobei durch die dabei erfolgende Relativbewegung zwischen Antriebsteil 1 und Lastteil 3 der bogenförmige Schwenkhebel 8 im entgegengesetzten Uhrzeigersinn um seine Schwenkachse 10 geschwenkt wird und dadurch die Achsgabeln 13 eingeschwenkt werden.

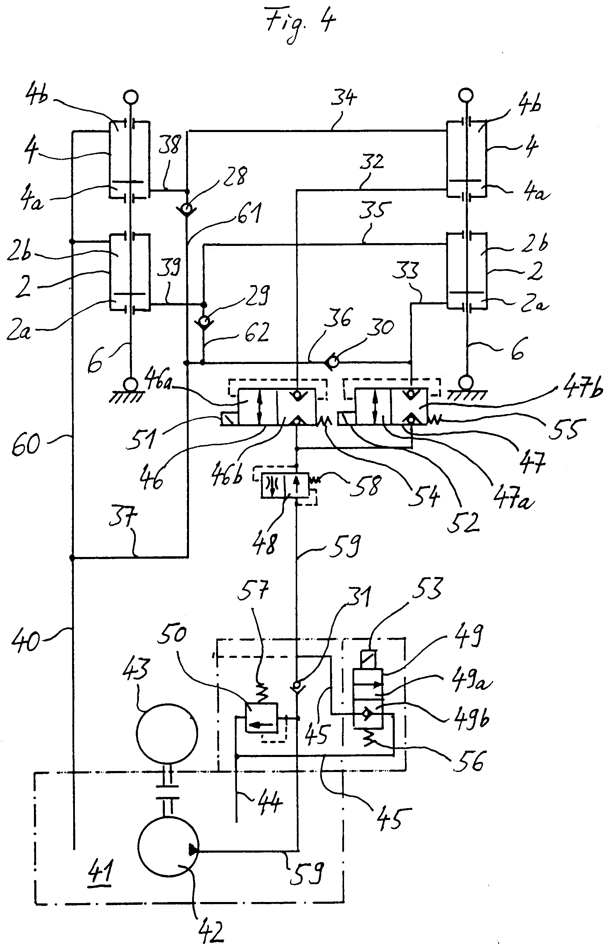

Figur 4 zeigt ein hydraulisches Schema für die bevorzugte Ausführungsform eines Hubwagens gemäß den Figuren 1 - 3. Die hydraulische Stelleinrichtung weist eine von einem Motor 43 angetriebene Hydraulikpumpe 42 auf, welche Druckmittel über eine Hauptzuleitung 59 wahlweise über den Druckmittelanschluß 32 zu dem unteren Arbeitsraum 4a des Stellzylinders 4 oder über den Druckmittelanschluß 33 dem unteren Arbeitsraum 2a des Hubzylinders 2 zuführt. Gemäß vorliegender Schaltung wird nur das rechte Zylinderpaar 2,4 direkt von der Pumpe angesteuert, während das linke Zylinderpaar in Abhängigkeit vom Betrieb des rechten Zylinderpaars arbeitet. Die Druckmittelanschlüsse 38,39 des linken Zylinderpaars sind nämlich über die Verbindungsleitungen 34,35 mit den oberen Arbeitsräumen 2b, 4b des rechten Zylinderpaares verbunden. Somit werden die unteren Arbeitsräume 2a, 4a des linken Zylinderpaares von den oberen Arbeitsräumen 2b, 4b des rechten Zylinderpaares mit Hydraulikflüssigkeit versorgt und folglich bewegen sich der linke Stellzylinder 4 und der linke Hubzylinder in Abhängigkeit von der Ansteuerung des rechten Stellzylinders 4 und des rechten Hubzylinders 2 durch die Pumpe 42.

In die Hauptzuleitung 59 ist der Pumpe 42 nachgeschaltet zunächst ein Rückschlagventil 31 und nachfolgend ein Drosselschieber 48 eingebaut. Der Drosselschieber 48 ist über einen hier nicht dargestellten Betätigungsmagneten gegen eine Feder 58 bewegbar und dient der Drosselung der Durchflußgeschwindigkeit des Druckmittels beim Absenken des Lastträgers 5 unter großer Last.

Zwischen dem Drosselschieber 48 und den Druckmittelanschlüssen 32,33 des rechten Zylinderpaares sind in einer Verzweigung zwei gleiche Steuerschieber 46,47 angeordnet, die jeweils mit dem Druckmittelanschluß 32 des Stellzylinders 4 bzw. mit dem Druckmittelanschluß 33 des Hubzylinders 2 verbunden sind. Jeder Steuerschieber besitzt ein Durchlaßteil 46a, 47a und ein Sperrteil 46b, 47b und ist über einen Betätigungsmagneten 51, 52 gegen eine Feder 54,55 bewegbar. In der in der Figur 4 dargestellten Position sind beide Steuerschieber 46, 47 auf"sperren" geschaltet.

Der Druckmittelanschluß 33 des unteren Arbeitsraums 2a des rechten Hubzylinders 2 ist über Ansaugleitungen 36,37,40 unter Zwischenschaltung eines Rückschlagventils 30 mit dem Druckmitteltank 41 verbunden, aus welchem die Pumpe 42 ebenfalls Druckmittel ansaugt. Desweiteren sind die Verbindungsleitungen 34, 35 zwischen dem rechten und dem linken Zylinderpaar über weitere Ansaugleitungen 61, 62 unter Zwischenschaltung von Rückschlagventilen 28, 29 mit den Ansaugleitungen 37, 40 verbunden. Schließlich führt eine weitere Ansaugleitung 60 von den beiden oberen Arbeitsräumen 2b, 4b des linken Zylinderpaares über die Ansaugleitung 40 zum Druckmitteltank 41.

Hinter dem Rückschlagventil 31 in der Hauptzuleitung 59 zweigt eine Ablaßleitung 45 ab, in der ein Ablaßschieber 49 mit einem Durchlaßteil 49a und einem Sperrteil 49b angeordnet ist, welcher durch einen Betätigungsmagneten 53 gegen eine Feder 56 betätigbar ist. Dieser Ablaßschieber wird zusammen mit den Steuerschiebern 46, 47 eingesetzt, um zwischen den verschiedenen Betriebszuständen I , II, III zu wechseln bzw. Zwischenstufen einzunehmen.

Die Ablaßleitung 45 mündet in eine weitere Ablaßleitung 44 eines Sicherheitsschiebers 50, der durch einen hier nicht dargestellten Betätigungsmagneten gegen eine Feder 57 betätigbar ist. Der Sicherheitsschieber stellt eine Überdrucksicherung dar, die beispielsweise auf 120 bar eingestellt sein kann.

Der in Figur 4 dargestellte Schaltzustand entspricht dem Grundbetriebszustand I gemäß Figur 1. Für einen Übergang in den Betriebszustand II, d. h. für ein paralleles Anheben des Lastträgers 5 unter Ausschwenken der Lastrollen 15 wird der Steuerschieber 46 auf Durchlaß geschaltet, so daß das Durchlaßteil 46a die Hauptzuleitung 59 mit dem Druckmittelanschluß 32 des unteren Arbeitsraums 4a des Stellzylinders 4 verbindet. Sobald die Pumpe 42 Druckmittel in den unteren Arbeitsraum 4a des rechten Stellzylinders pumpt, bewegt sich der rechte Stellzylinder 4 - und damit der von ihm abhängige linke Stellzylinder 4 - relativ nach unten und nimmt nach einem kurzen Freiweg den rechten Stellzylinder 2 mit, der über seinen Druckmittelanschluß 33 über die Ansaugleitungen 36, 37, 40 aus dem Druckmitteltank 41 Druckmittel ansaugt. Der linke Hubzylinder 2 wird sowohl über die durch die Verbindungsleitung 35 und den Druckmittelanschluß 39 dem unteren Arbeitsraum 2a zugeführte Hydraulikflüssigkeit als auch durch die Mitnahme des linken Stellzylinders 4, somit insgesamt in Abhängigkeit des rechten Zylinderpaares, nach unten bewegt.

Zum Wechsel von dem Betriebszustand II (Parallelhub; Figur 2) in den Betriebszustand III (Stufenhub; Figur 3) bleibt der Steuerschieber 46 auf Durchlaß geschaltet und der Ablaßschieber 49 wird zulätzlich auf Durchlaß geschaltet, in dem die Ablaßleitung 45 mit dem Durchlaßteil 49a des Ablaßschiebers 49 verbunden wird. Unter dem Druck des Lastteils 3 - übertragen durch die Höhensteuereinrichtung - entleert sich die in dem unteren Arbeitsraum 4a befindliche Hydraulikflüssigkeit über den Druckmittelanschlluß 32, den Steuerschieber 46a, den Drosselschieber 48, die Hauptzuleitung 59, die Ablaßleitung 45, den Ablaßschieber 49a und die Ablaßleitung 44 in den Druckmitteltank 41, wobei sich beide Stellzylinder 4 relativ zur Kolbenstange 6 anheben.

Der Übergang von dem Betriebszustand III in den Betriebszustand II, der am oberen Ende einer Rampe beim Wechsel auf eine horizontale Fahrbahn erfolgt, ist auf umgekehrten Wege steuerbar: Die Pumpe 42 pumpt über die Hauptzuleitung 59, den Drosselschieber 48, den Steuerschieber 46a und den Druckmittelanschluß 32 Hydraulikflüssigkeit in den unteren Arbeitsraum 4a des rechten Stellzylinders 4, woraufhin sich dieser (und der linke Stellzylinder 4 ebenso) relativ zur Kolbenstange 6 absenkt in die Position gemäß Figur 2.

Für einen Übergang von dem Betriebszustand III (Stufenhub; Figur 3) in den Grundbetriebszustand I gemäß Figur 1 sind der zu dem rechten Hubzylinder gehörende Steuerschieber 47 und der Ablaßschieber 49 auf Durchlaß zu schalten, woraufhin sich der rechte und der linke Hubzylinder 2 unter der Gewichtskraft des Lastteils 3 relativ zur Kolbenstange 6 anheben. Hierbei erfolgt eine Relativbewegung zwischen Antriebsteil 1 und Lastteil 3, die ohne Einfluß auf die Höhensteuereinrichtung bleibt, weshalb auch die Lastrollen 15 nicht geschwenkt werden.

Für den umgekehrten Übergang vom Grundbetriebszustand I gemäß Figur 1 in den Betriebszustand III gemäß Figur 3 ist der Steuerschieber 47 auf Durchlaß zu schalten und dem unteren Arbeitsraum 2a des rechten Hubzylinders 2 von der Pumpe 42 über die Hauptzuleitung 59 und den Druckmittelanschlluß 33 Hydraulikflüssigkeit zuzuführen.

Für ein Absenken des Lastträgers aus dem Betriebszustand II in den Betriebszustand I sind beide Steuerschieber 46, 47 und der Ablaßschieber 49 auf Durchlaß zu schalten, woraufhin sich beide Zylinderpaare relativ zu ihren Kolbenstangen 6 unter der Gewichtskraft des Lastträgers 3 nach oben bewegen.

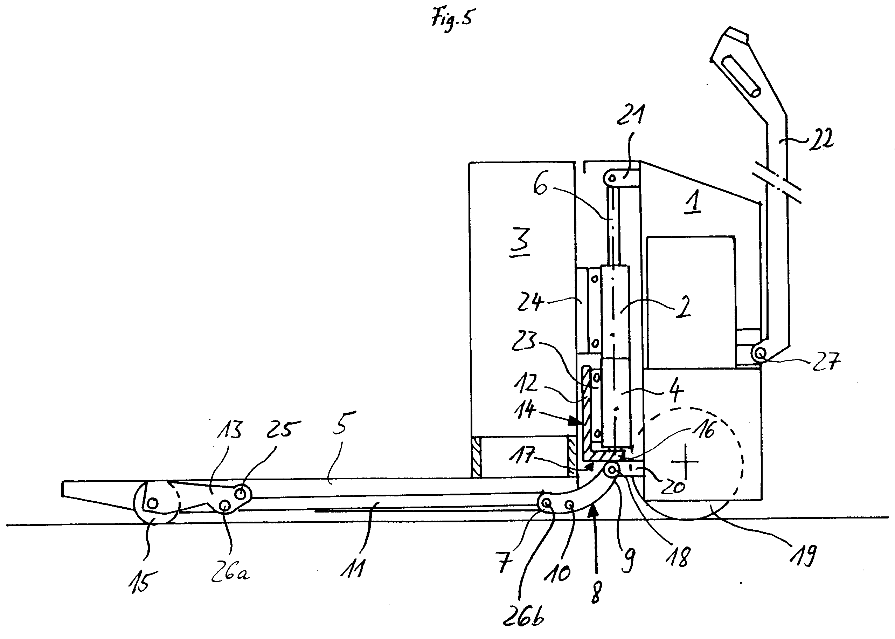

Figur 5 zeigt ein weiteres Ausführungsbeispiel des Hubwagens, dessen Funktionen dem des Hubwagens gemäß der Figur 1 entsprechen. Im Unterschied zu dem Hubwagen gemäß Figur 1 ist hier der Hubzylinder 2 mit einem Flansch 24 am Lastteil 3 befestigt und die dem Hubzylinder 2 und dem Stellzylinder 4 gemeinsame Kolbenstange 6 ist mit ihren Halterungen 20, 21 am Antriebsteil 1 befestigt. Ferner ist der Stellzylinder 4 in dieser Ausführungsform der untere Zylinder und der Hubzylinder 2 der obere, was bei der Ausführungsform gemäß Figur 1 umgekehrt der Fall ist. Auch bei dieser Ausführungsform eines Hubwagens besteht die Höhensteuereinrichtung aus einer L-förmigen Stange 14, deren einer Schenkel 12 über einen Flansch 23 an dem Zylindergehäuse des Stellzylinders 4 befestigt ist und deren Basisschenkel 16 mit seiner Unterseite 17 ein Gleitlager für die Rolle 18 des bogenförmigen Schwenkhebels 8 bildet.

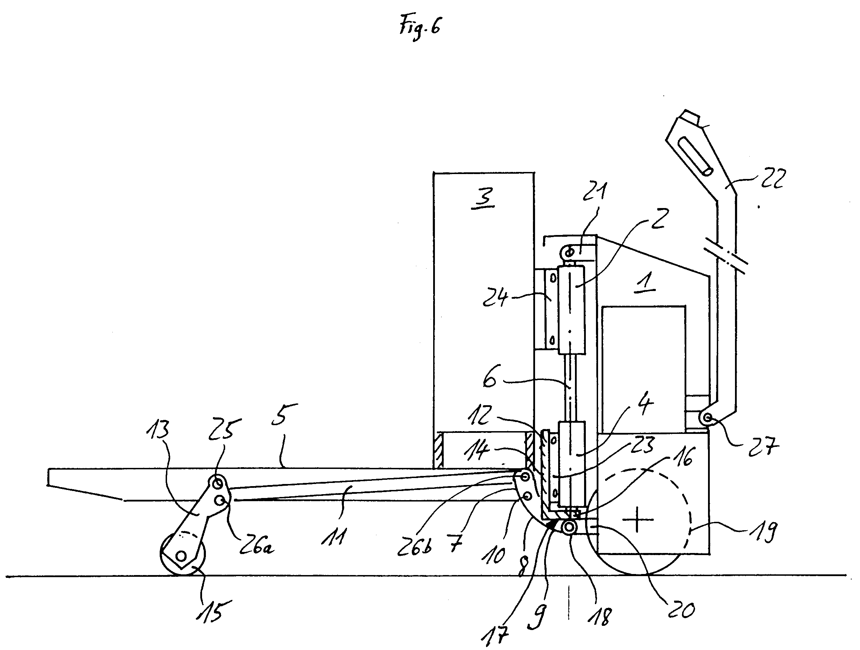

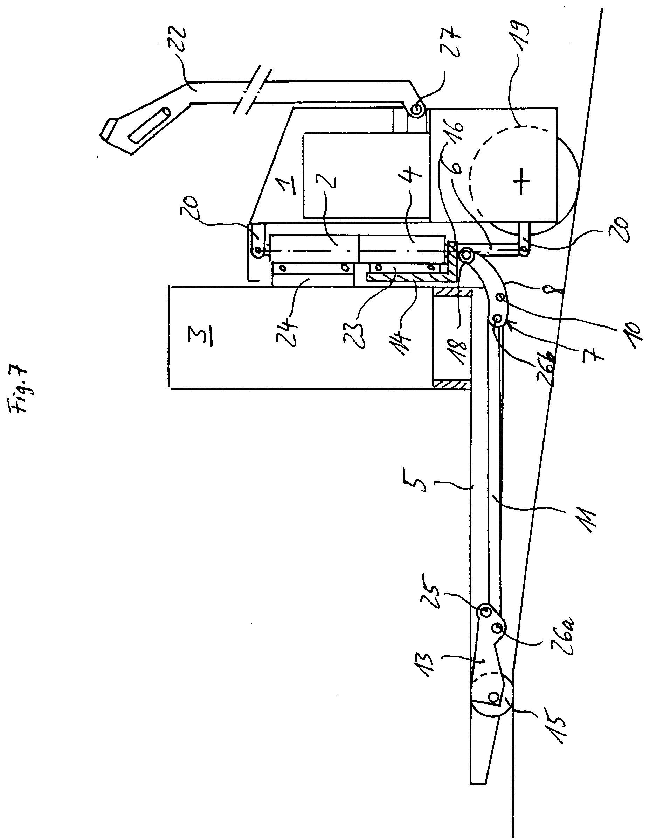

Da ansonsten die weiteren Teile mit der Ausführungsform gemäß Figur 1 identisch sind, werden an dieser Stelle nur noch einmal die Betriebszustände II (Parallelhub; Figur 6) und III (Stufenhub; Figur 7) erläutert.

Um von dem Grundbetriebszustand I gemäß Figur 5 in den Betriebszustand II gemäß Figur 6 zu gelangen, wird das Lastteil mittels des Hubzylinders 2 relativ zum Antriebsteil 1 angehoben, wobei die Höhensteuereinrichtung, bestehend aus der L-förmigen Stange 14 und dem bogenförmigen Schwenkhebel 8, die Relativbewegung auf die Achsgabeln 13 der Lastrollen 15 überträgt und diese aus ihrer Ruhelage ausschwenkt.

Um von dem Betriebszustand II in den Betriebszustand III gemäß Figur 7 zu gelangen, wird die beim Übergang vom Grundbetriebszustand I in den Parallelhub erfolgte Schwenkbewegung des bogenförmigen Schwenkhebels 8 durch den Stellzylinder 4 rückgängig gemacht, in dem dieser relativ zur Kolbenstange 6 nach oben fährt. Dies kann beispielsweise dadurch geschehen, daß die hydraulikflüssigkeit aus dem unteren Arbeitsraum des Stellzylinders 4 abgelassen wird, so daß sich der Stellzylinder 4 unter dem Druck des Endes 9 des Schwenkhebels 8 nach oben bewegt und die Lastrollen 15 einschwenken.

Die weiteren Übergänge zwischen den genannten Betriebszuständen I - III erfolgen in analoger Weise wie zu den Figuren 1 - 3 beschrieben.

## Patentansprüche

1. Gabelhubwagen,
mit einem Antriebsteil,
mit einem an dem Antriebsteil geführten Lastteil, das mittels eines oder mehrerer Hubzylinder relativ zum Antriebsteil höhenbewegbar ist und das einen in festem Winkel zur relativen Bewegungsrichtung angeordneten Lastträger mit darunter an schwenkbaren Achsgabeln angeordneten Lastrollen aufweist,
mit einer Höhensteuereinrichtung, die in Abhängigkeit der Relativbewegung zwischen Antriebsteil und Lastteil die Achsgabeln unter Veränderung des Abstands zwischen Lastrollen und Lastträger über ein Gestänge schwenkt, und
mit einem auf das Gestänge einwirkenden Stellzylinder, der unabhängig von der Relativbewegung ein Verschwenken der Achsgabeln ermöglicht,
dadurch gekennzeichnet,
daß der Hubzylinder (2) und der Stellzylinder (4) auf einer gemeinsamen Kolbenstange (6) sitzen.

2. Gabelhubwagen nachnt Anspruch 1,
dadurch gekennzeichnet,
daß der Hubzylinder (2) am Antriebsteil (1) befestigt ist und die dem Hubzylinder (2) und dem Stellzylinder (4) gemeinsame Kolbenstange (6) am Lastteil (3) (Fig. 1).

3. Gabelhubwagen nach Anspruch 1,
dadurch gekennzeichnet,
aß der Hubzylinder (2) am Lastteil (3) befestigt ist und die dem Hubzylinder (2) und dem Stellzylinder (4) gemeinsame Kolbenstange (6) am Antriebsteil (1) (Fig. 5).

4. Gabelhubwagen nach einem der Ansprüche 1 bis 3,
dadurch gekennzeichnet,
daß die Höhensteuereinrichtung einen bogenförmigen Schwenkhebel (8) aufweist, dessen eines Ende (7) über das Gestänge (11) gelenkig mit den Achsgabeln (13) der Lastrollen (15) verbunden ist, dessen anderes Ende (9) in Wirkverbindung mit dem Stellzylinder (4) steht, und der um eine zwischen seinen Enden (7, 9) angeordnete Schwenkachse (10) schwenkbar ist.

5. Gabelhubwagen nach einem der vorstehenden Ansprüche,
dadurch gekennzeichnet,
daß die Höhensteuereinrichtung ferner eine im wesentlichen L-förmige Stange (14) aufweist, die mit dem einen Schenkel (12) am Gehäuse des Stellzylinders (4) befestigt ist, und mit dem anderen (Basis-)Schenkel (16) in Wirkverbindung mit dem bogenförmigen Schwenkhebel (8) steht.

6. Gabelhubwagen nach Anspruch 4 oder 5,
dadurch gekennzeichnet,
daß der Schwenkhebel (8) an seinem dem Gestänge (11) abgewandten Ende (9) eine Rolle (18) aufweist, welche auf der Unterseite (17) des Basisschenkels (16) der L-förmigen Stange (14) gleitend geführt ist.

7. Gabelhubwagen nach Anspruch 4 oder 5,
dadurch gekennzeichnet,
daß das dem Gestänge (11) abgewandte Ende (9) des Schwenkhebels (8) mittels eines gelenkigen Zwischenstücks gelenkig mit dem Basisschenkel (16) verbunden ist.

8. Gabelhubwagen nach einem der vorstehenden Ansprüche,
dadurch gekennzeichnet,
daß die Höhensteuereinrichtung, das Gestänge sowie die Doppel-Zylinderanordnung doppelt vorhanden sind, und zwar je einmal zu beiden Seiten des Hubwagens.

9. Gabelhubwagen nach einem der vorstehenden Ansprüche,
dadurch gekennzeichnet,
daß der Stellzylinder (4) und der Hubzylinder (2) über eine hydraulische Steuereinrichtung zusammengeschlossen sind.

10. Gabelhubwagen nach einem der vorstehenden Ansprüche,
dadurch gekennzeichnet,
daß einer der beiden auf einer gemeinsamen Kolbenstange (6) sitzenden Zylinder (2,4) über eine Saugleitung (36,40) mit dem Druckmitteltank (41) verbunden ist und von der Bewegung des anderen Zylinders (4,2) beim Wechsel bestimmter Betriebszustände mitgenommen wird.
